## Europäisches Patentamt
## European Patent Office
## Office européen des brevets

(19)

(11) Publication number: **0 157 746**
**B1**

(12)

# EUROPEAN PATENT SPECIFICATION

(45) Date of publication of the patent specification: **04.11.87**

(51) Int. Cl.⁴: **B 23 K 3/00**

(21) Application number: **85850086.1**

(22) Date of filing: **12.03.85**

(54) A soldering iron having means for removing soldering fumes by suction.

(30) Priority: **05.04.84 SE 8401915**

(43) Date of publication of application:
**09.10.85 Bulletin 85/41**

(45) Publication of the grant of the patent:
**04.11.87 Bulletin 87/45**

(84) Designated Contracting States:
**AT BE CH DE FR GB IT LI NL**

(56) References cited:
**DD-A-128 262**
**DE-C-562 094**
**US-A-4 358 662**

(73) Proprietor: **Lectrostatic Marknads AB, P.O. Box 314, S-532 00 Skara (SE)**

(72) Inventor: **Kihlström, Christer, Axfallsvägen 26, S-532 00 Skara (SE)**

(74) Representative: **Omming, Allan, A. OMMING & CO. AB Sveavägen 28- 30, S-111 34 Stockholm (SE)**

LIBER, STOCKHOLM 1987

## Description

The invention relates to a soldering iron having means for withdrawing by suction soldering fumes created by resin present in the solder, comprising a handle having an electrical heating element with an outer metal casing, a soldering tip connected to the electrical heating element, and a metallic suction nozzle, the front end of which lies in the proximity of the soldering tip and the rear end of which is connected to a channel in the handle, this channel in turn being connected to a flexible plastic hose connected to a suction source.

Such soldering irons are particularly suited for removing the irritating and often harmful fumes generated by the solder flux incorporated in the solder or used separately in conjunction therewith, this flux containing volatile resins. The most serious drawback with soldering irons of this kind is the relatively short time in which they can be used before needing to clean the nozzle and the suction channel. In normal soldering irons of this kind, nominally about 30 liters of air are drawn through the nozzle each minute, which means that the temperature of the nozzle is much lower than that of the solder fumes generated. This means in turn that vaporized resins transform to solids in the nozzle and/or the suction channel such that the suction effect is totally lost as a result of these resin deposits already after only some few hours of use. These deposits, or resin plugs, are removed, for example, with the aid of chemical solvents or by mechanical means, which is often a time-laborious task.

DD-A-128 262 relates to a soldering iron for withdrawing by suction fume gases. The electrical heating element of the known soldering iron is surrounded by a tube, which in turn is connected to a suction channel arranged in the handle. The suction channel is connected to a flexible suction hose. There is no metallic heat transfer connection between the suction tube and the electrical heating element and, therefore, vaporized resins will transform to solids in the ringshaped space between the heating element and the said tube and/or in the suction channel and cause the problems mentioned above.

DE-C-562 094 discloses a soldering iron with a metallic suction tube to be connected to a flexible hose. The suction tube is certainly connected to a metallic clamp to the iron but between the handle and the electrical heating element, which means that only a minor heat transfer occurs and that the nozzle of the suction tube will be cooled down by the insucked air to about room temperature thereby causing a solidification of vaporized resins within the suction tube.

US-A-4 358 662 discloses an electric soldering iron provided with an elongated heater barrel extending from a handle and a soldering tip projecting from the end of the barrel. The barrel is provided with a thermally isolated fume suction attachment surrounding the tip and including a suction tube connected to a flexible hose. Like the above mentioned known soldering irons the metallic suction tube will cool down the vaporized resin fumes causing deposits within the suction tube which must be chemically or mechanically removed.

It is, therefore, a prime object of the invention to provide a soldering iron in which the deposits of resin in the nozzle and/or suction channel is completely or at least substantially avoided, and to shift the unavoidable deposition of tough resin to the readily accessible flexible hose.

This object is fully realized by means of the invention as defined in the following claims and as illustrated in the following description and the accompanying drawing. In the drawing

Figur 1 is a side view of an embodiment of the soldering iron according to the invention;

Figure 2 is a sectional view taken on the line II-II in Figure 1; and

Figure 3 is a sectional view taken on the line III-III in Figure 1.

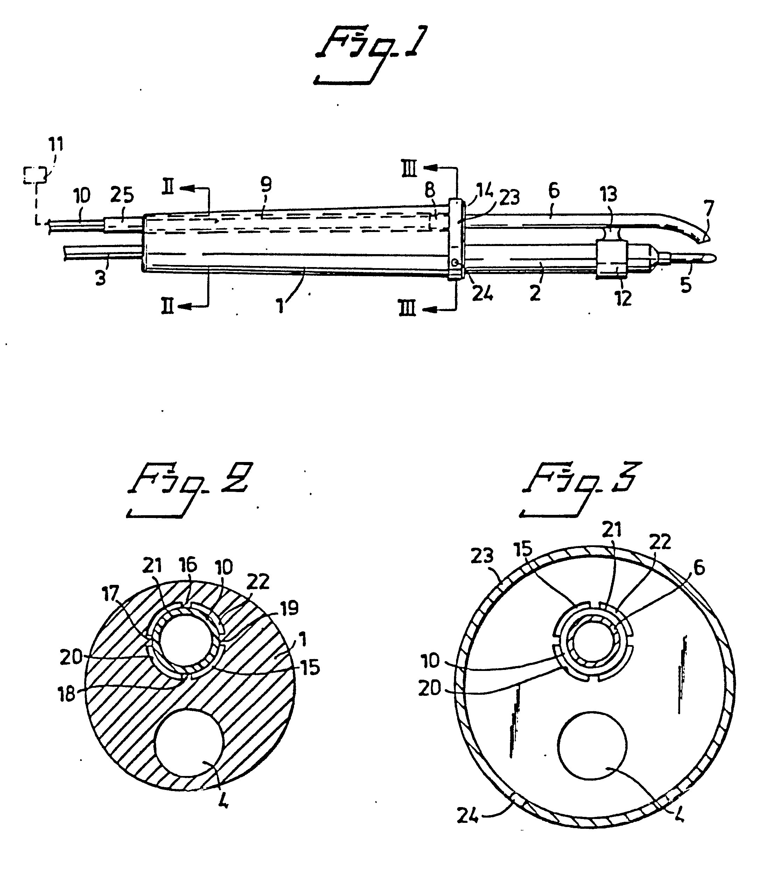

The illustrated soldering iron has a handle 1 made of plastics, wood or some other suitable material, a heating element 2 which extends from one end of the handle 1 and which has a metal outer casing, suitably made of steel. The heating element 2 has an internal resistance member to which voltage is applied via a cable 3 passing through a bore 4 in the longitudinal direction of the handle 1. Mounted on the outer end of the element 2 is an exchangeable soldering tip or bit 5 with which solder and flux are melted to effect a soldering operation. The cable 3 is not shown in Figures 2 and 3. Extending along the element 2 is a metal tubular suction nozzle 6 with the outer end 7 thereof directed towards the soldering site. The rear end 8 of the nozzle 6 is connected to a channel 9 passing through the handle, this channel in turn being connected to a suction hose 10 which is connected to a suction source 11. When the suction source 11, or the suction fan, is operating fumes generated during a soldering operation are withdrawn from the soldering site by suction and depart from the fan 11 through a filter means not shown.

In order to prevent the hot soldering fumes withdrawn from the soldering site from cooling in the suction nozzle 6 to such an extent that resin precipitates on the inner walls thereof, the metallic suction nozzle 6 is in metallic heat transfer contact with the metallic casing of the element 2, and thus in heat transfer connection therewith, in accordance with the present invention. In the illustrated embodiment, this heat transfer connection comprises a metal ring 12 which is placed on the metal casing of the element 2 and which is welded or soldered to the suction nozzle via a metal bridge formed on the ring 12. This enables the nozzle 6 to be readily drawn from the heating element. As will be understood, the metal ring 12 may be supplemented with one more metal ring attached to the nozzle 6, or the ring may be given an axial length corresponding, for example, to the total length of the metal casing, in which case the bridge 13 comprises an elongated flange between the long ring or sleeve and the nozzle.

In order to obtain a concentrated, readily accessible resin deposit, the suction hose 10 which is inserted into a bore 15 in the handle extends through the whole length of the channel 9 to a location approximately adjacent the end of the soldering tip 5 facing said handle, wherewith the end 8 of the nozzle 6 is inserted into this part of the suction hose through an opening located in an end plate 14. In the illustrated embodiment the suction hose 10 is considered to comprise a continuous length of hose extending to the suction source 11. It will be understood, however, that the hose may also comprise a plurality of hose sections joined together by means of connectors herefor. At least that part of the suction hose located within the handle preferably comprises a silicon polymer. When the hot soldering fumes have passed through the suction nozzle 6 and flow into the plastics suction channel 9 the fumes are cooled rapidly to a temperature at which the resin present in the fumes precipitates on to the inner surfaces of said hose part. This precipitate can be readily removed, by withdrawing the hose 10 from the bore 15 in the handle 1 and lightly rubbing the end of the hose, thereby to loosen the deposits so that they fall from the hose. In order to provide for a more rapid cooling of the hot soldering fumes, longitudinally extending fins 16, 17, 18, 19 or like spacers may be arranged in the bore 15, as illustrated in Figures 2 and 3, these spacers forming between the inner wall 20 of the bore and the outer wall 21 of the hose 10 at least one air through-flow channel, for example the channel 22, which communicates with ambient air. The handle 1 may be provided with a hollow cover 23 closed by means of the cover plate 14 and into which the channel or channels 22 discharge. In this respect air can be drawn in either by sealing the cover plate 14 to render the same pervious or, for example, by providing a vent, for example the hole 24, in the wall of the cover 23. The channel or channels 22 also opens out, or open out, in a sleeve 25, Figure 1, and can there be connected to a suction source, which suitably comprises the suction source 11. In addition to the aforesaid rapid cooling of the soldering fumes, and therewith precipitation of resin in the aforementioned hose end, which due to its flexibility and the choice of material for its manufacture is readily cleansed, the additional advantage is afforded that the handle 1 is always maintained at a comfortable temperature.

If for some reason or other a layer of resin should be deposited in the nozzle, this layer can be rapidly removed by interrupting the insuction of air. As a result of the aforesaid heat transfer connection the nozzle will be quickly heated to a high temperature, causing the resin to melt and run from the nozzle.

The illustrated and described embodiment of the invention can also be modified in ways other than those inferred above. For example the ring or sleeve 12 may comprise a metal clamp means connected with the nozzle 6 and clamped firmly on the heating element 2. The illustrated slightly conical shape of the handle 1 can be replaced with any suitable ergonometrical configuration.

## Claims

1. A soldering iron having means for withdrawing by suction soldering fumes created by resin present in the solder, comprising a handle (1) having an electrical heating element (2) with an outer metal casing, a soldering tip (5) connected to the electrical heating element, and a metallic suction nozzle (6), the front end (7) of which lies in the proximity of the soldering tip and the rear end (8) of which is connected to a channel (9) in the handle, this channel in turn being connected to a flexible plastic hose (10) connected to a suction source (11), characterized in that the tubular suction nozzle (6) is in metallic heat transfer contact with the electrical heating element (2) and in that the flexible plastic hose (10) runs through the whole length of the channel (9) and is connected to the rear end (8) of the tubular suction nozzle (6).

2. A soldering iron according to Claim 1, characterized in that at least part of the hose (10) running through the whole length of the channel (9) is made of a flexible silicon polymer material.

3. A soldering iron according to Claim 1 or Claim 2, characterized in that the metallic heat transfer contact is established with the aid of at least one metal ring (12) detachably connected to the metal casing of the electrical heating element (2) and firmly connected to the tubular suction nozzle (6).

4. A soldering iron according to any one of Claims 1-3, characterized in that said channel (9) is having the shape of a bore (15) being provided on its inner wall (20) with spacer means (16, 17, 18, 19), which abut the outer wall (21) of the flexible plastic hose (10) and which together with said outer wall define at least one air through-flow channel (22).

5. A soldering iron according to Claim 4, characterized in that the air through-flow channel (22) is connected to a suction source (11).

6. A soldering iron according to Claim 4 or Claim 5, characterized in that the handle (1) has arranged on the end thereof facing the soldering tip (5) a cover (23), in that the rear end part (8) of the nozzle (6) passes through the interior of said housing (23) which interior communicates with the ambient air and with the air through-flow passage (22).

## Patentansprüche

1. Lötkolben mit einer Einrichtung zum Absaugen von Lötdampfen, die durch das in dem Lot enthaltene Kunstharz erzeugt werden, mit einem Handgriff (1), der ein elektrisches Heizelement (2) mit einem äußeren metallischen Gehäuse besitzt, mit einer Lötspitze (5), die mit dem elektrischen Heizelement verbunden ist, und mit einer metallischen Absaugdüse (6), deren Vorderende (7) in der Nähe der Lötspitze liegt und deren hinteres Ende (8) an einen Kanal (9) im Handgriff angeschlossen ist, der seinerseits mit einem flexiblen Plastikschlauch (10) verbunden ist, der nach einer Absaugquelle (11) führt, dadurch gekennzeichnet, daß die rohrförmige Absaugdüse (6) in metallischer Wärmeübertragungsberührung mit dem elektrischen Heizelement (2) steht und daß der flexible Plastikschlauch (10) durch die gesamte Länge des Kanals (9) hindurch verläuft und am Hinterende (8) der rohrförmigen Absaugdüse (6) angeschlossen ist.

2. Lötkolben nach Anspruch 1, dadurch gekennzeichnet, daß wenigstens ein Teil des Schlauches (10), der durch die gesamte Länge des Kanals (9) verläuft, aus flexiblen Siliconpolymerisationsprodukten besteht.

3. Lötkolben nach Anspruch 1 oder Anspruch 2, dadurch gekennzeichnet, daß die metallische Wärmeübertragungsberührung durch wenigstens einen metallischen Ring (12) hergestellt wird, der lösbar mit dem metallischen Gehäuse des elektrischen Heizelementes (2) und fest mit der rohrförmigen Absaugdüse (6) verbunden ist.

4. Lötkolben nach einem der Ansprüche 1 bis 3, dadurch gekennzeichnet, daß der Kanal (9) die Form einer Bohrung (15) hat, die an ihrer Innenwand (20) mit Abstandshaltern (16, 17, 18, 19) versehen ist, die an der Außenwand (21) des flexiblen Plastikschlauches (10) anstoßen und zusammen mit der Außenwand wenigstens einen Luftströmungskanal (22) bilden.

5. Lötkolben nach Anspruch 4, dadurch gekennzeichnet, daß der Luftdurchflußkanal (22) an eine Absaugquelle (11) angeschlossen ist.

6. Lötkolben nach Anspruch 4 oder 5, dadurch gekennzeichnet, daß der Handgriff (1) an seinem nach der Lötspitze (5) weisenden Ende eine Kappe (23) aufweist, und daß der hintere Endteil (8) der Düse (6) durch das Innere der Kappe (23) hindurchläuft, wobei das Innere der Kappe mit der Umgebungsluft und mit der Luft im Durchströmungskanal (22) in Verbindung steht.

## Revendications

1. Appareil à braser avec installation pour éliminer par aspiration les fumées de brasage créées par la résine présente dans la brasure, comprenant une poignée (1) ayant un élément électrique chauffant (2) avec un boîtier métallique extérieur, un fer à braser (5) relié à l'élément électrique chauffant, et un bec métallique d'aspiration (6) dont l'extrémité avant (7) se situe au voisinage du fer à braser et dont l'extrémité arrière (8) est reliée à une conduite (9) intérieure à la poignée, cette conduite étant à son tour reliée à une gaine en plastique souple (10) connectée à une source d'aspiration (11), caractérisé par le fait que le bec tubulaire d'aspiration (6) est en contact métallique à transfert thermique avec l'élément électrique chauffant (2) et par le fait que la gaine en plastique souple (10) s'étend sur toute la longueur de la conduite (9) et se trouve reliée à l'extrémité arrière (8) du bec tubulaire d'aspiration (6).

2. Appareil à braser selon la revendication 1, caractérisé par le fait qu'une partie au moins de la gaine (10) circulant sur toute la longueur de la conduite (9) est fabriquée en matériau polymère de silicone souple.

3. Appareil à braser selon la revendication 1 ou la revendication 2, caractérisé par le fait que le contact métallique à transfert thermique est établi à l'aide d'au moins une bague métallique (12) reliée de façon amovible au boîtier métallique de l'élément électrique chauffant (2), et solidement reliée au bec d'aspiration tubulaire (6).

4. Appareil à braser selon l'une quelconque des revendications 1-3, caractérisé par le fait que ladite conduite (9) a la forme d'un alésage (15) équipé dans sa paroi intérieure (20) de moyens de nervure (16, 17, 18, 19), qui viennent buter sur la paroi extérieure (21) de la gaine en plastique souple (10) et qui, ensemble avec ladite paroi extérieure définissent au moins un canal de circulation d'air (22).

5. Appareil à braser selon la revendication 4, caractérisé par le fait que le canal de circulation d'air (22) est relié à une source d'aspiration (11).

6. Appareil à braser selon la revendication 4 ou la revendication 5, caractérisé par le fait que la poignée (1) porte à son extrémité tournée vers le fer à braser (5) un capot (23), par le fait que la partie d'extrémité arrière (8) du bec (6) passe par l'intérieur dudit boîtier (23), lequel intérieur communique avec l'air ambiant et avec le passage de circulation d'air (22).

Fig. 1

Fig. 2

Fig. 3